# EUROPÄISCHE PATENTSCHRIFT

(11) **EP 2 759 236 B1**
(45) Veröffentlichungstag und Bekanntmachung des Hinweises auf die Patenterteilung: **13.01.2016**
(21) Anmeldenummer: 14151644.3
(22) Anmeldetag: 17.01.2014
(51) Int. Cl.: A47J 31/54

(54) **Dickschichtheizung und Adapter dafür**
Thik-film heater and adaptor for
Chauffage à couche épaisse et adapteur pour

(30) Priorität: 24.01.2013 DE 102013201181
(43) Veröffentlichungstag der Anmeldung: 30.07.2014
(73) Patentinhaber: BSH Hausgeräte GmbH, 81739 München (DE)
(72) Erfinder: Grieb, Jöran, 83253 Rimsting (DE); Hauser, Andreas, 83352 Altenmarkt (DE); Jäger, Harald, 83349 Palling (DE); Werner, Helmut, 83361 Kienberg (DE)

(56) Entgegenhaltungen:
- WO-A2-2009/043851
- DE-A1-102007 034 370
- FR-A1- 2 920 654
- US-A1- 2010 046 934

## Beschreibung

Die Erfindung betrifft eineDickschichtheizung, insbesondere für eine Kaffeemaschine, mit einem darin einsetzbaren Adapterelement, welches die Durchflussmenge des zu erhitzenden Wassers definiert, wobei das Adapterelement Mittel zur Verlängerung des Fließweges des Zubereitungswassers durch die Dickschichtheizung aufweist.

Die DE 60 2005 004 183 T2 zeigt eine Kaffeemaschine, die zum Erhitzen des für den Brühvorgang benötigten Wassers über ein Heizelement in Form eines Thermoblocks verfügt. Der Betrieb eines Thermoblocks verlangt eine verhältnismäßig hohe Energiemenge, da zunächst die relativ große Masse des Thermoblocks aufgeheizt werden muss, bevor eine gewünschte Brühtemperatur des Wassers erreicht wird. Ein Thermoblock macht den Kaffeevollautomaten zudem schwerer.

Daneben gibt es Kaffeevollautomaten mit Durchlauferhitzer, wie z. B. in der DE 20 2001 107 306 U1 erwähnt. Oftmals verfügen die Durchlauferhitzer über zwei Rohrheizungen, die das Zubereitungswasser für ein Getränk in Teilmengen erhitzen.

Dickschichtheizungen nach dem Oberbegriff des Anspruchs 1 sind beispielsweise aus der DE 10 2007 034 370 A1, der WO 2009/043851 A2, der US 2010/046934 A1 oder der Fr 2 920 654 A1 bekannt.

Der vorliegenden Erfindung liegt die Aufgabe zugrunde, ein alternatives kostengünstiges Heizelement für Heißgetränkezubereitungsmaschinen, insbesondere für Kaffeemaschinen wie Kaffeevollautomaten bereitzustellen.

Diese Aufgabe wird durch eine Dickschichtheizung gemäß den Merkmalen des Anspruchs 1 gelöst.

Erfindungsgemäß wird eine Dickschichtheizung als Alternative zu den bekannten Heizeinrichtungen verwendet. Ihr Einsatz in Haushaltsgeräten ist an sich geläufig, allerdings für andere Wassermengen. Sie umfasst einen wasserdurchströmbaren Rohrabschnitt und ein Heizungselement, das flächig auf die Außenseite des Rohrabschnitts aufgebracht ist. Damit bietet die Erfindung ein einfaches und an sich bekanntes Bauteil, das sich aufgrund seiner kompakten Bauweise insbesondere in einem Kaffeevollautomaten gut integrieren lässt.

Standardisierte Dickschichtheizungen, wie sie z. B. in Waschmaschinen oder Geschirrspülmaschinen zum Einsatz kommen, sind für höhere Durchflussmengen des zu erhitzenden Wassers ausgelegt. Die Erfindung lehrt deshalb eine Dickschichtheizung für Kaffeemaschinen mit einem darin einsetzbaren Adapterelement, das die Durchflussmenge des zu erhitzenden Wassers definiert, insbesondere reduziert. Damit können für Kaffeemaschinen grundsätzlich herkömmliche Dickschichtheizungen eingesetzt werden, die ohne den Bedarf einer konstruktiven Anpassung kostengünstig zu erhalten sind. Durch das erfindungsgemäße Adapterelement lassen sie sich an den erforderlichen Durchfluss in einer Kaffeemaschine anpassen, der auch zwischen unterschiedlichen Kaffeemaschinen variieren kann. Vorteilhafterweise kann das Adapterelement austauschbar sein, so dass es bei Störungen einfach ausgetauscht werden kann.

Für den Einsatz in einer Kaffeemaschine dürfte die Durchflussmenge einer herkömmlichen Dickschichtheizung regelmäßig verringert werden müssen. Bei der erfindungsgemäßen Dickschichtheizung weist das Adapterelement Mittel zur Verlängerung des Fließweges des Zubereitungswassers durch die Heizung auf. Sie lenken die ursprünglich axiale Fließrichtung des Wassers in der Heizung um, sodass zwar eine - erwünschte - geringere Menge an Wasser die Heizung durchströmt, sie aber länger innerhalb der Heizung verweilt. Wegen der längeren Verweilzeit kann das Wasser mehr Heizenergie aufnehmen. Bei unveränderten Außenabmessungen der Heizung kann damit die verringerte Durchflussmenge mit geringerer Energie auf die gleiche Endtemperatur erhitzt werden.

Gemäß der Erfindung weist das Adapterelement ein zum Rohrabschnitt der Dickschichtheizung konzentrisches Innenrohr auf und das Mittel zur Verlängerung des Fließweges ist als eine auf dem Innenrohr aufgeschobene Spirale ausgebildet. Der Durchmesser des Innenrohrs ist kleiner als der Durchmesser des Rohrabschnitts. Das Zubereitungswasser wird in einem - durch eine Durchmesseränderung des Innenrohrs anpassbaren - Ringspalt zwischen dem Innenrohr und dem Rohrabschnitt erhitzt. Die Spirale auf dem Innenrohr liegt am Rohrabschnitt an und bildet einen gewendelten Kanal im Ringspalt. Als separates Bauteil kann die Spirale gegen eine andere mit geringerer oder stärkerer Neigung ihrer Wendel ausgetauscht werden. Dadurch kann bei gleichem Volumen des Ringspalts bzw. bei gleichem Innenrohr die Verweildauer des Wassers in der Dickschichtheizung verändert werden.

Nach einer alternativen Ausgestaltung der Erfindung können das Mittel zur Verlängerung des Fließweges und das Innenrohr einstückig ausgebildet sein. Beispielsweise kann das Innenrohr außenseitig eine gewindeartig umlaufende Rippe tragen. Sie ist am Innenrohr angeformt und daher nicht ohne das Innenrohr austauschbar. Dafür kann seine Herstellung und Montage kostengünstiger sein, weil es zusammen mit dem Innenrohr gefertigt und nicht separat montiert werden muss. Zudem kann der Schlupf von Zubereitungswasser zwischen dem Mittel zur Verlängerung des Fließweges und dem Innenrohr ausgeschlossen werden.

Nach einer weiteren vorteilhaften Ausgestaltung der Erfindung kann eine axiale Begrenzung des Innenraums der Dickschichtheizung vorgesehen sein, indem das Adapterelement zwei endseitige und über seinen Umfang überstehende Verschlussdeckel aufweist. Die Verschlussdeckel verschließen den Ringspalt zwischen dem Innenrohr und dem Rohrabschnitt der Dickschichtheizung und verfügen über einen Wassereinlaufstutzen bzw. einen Wasserauslaufstutzen. Der Verschlussdeckel auf der angeströmten Seite der Dickschichtheizung trägt den Wassereinlaufstutzen für das Frischwasser, der gegenüberliegende Verschlussdeckel trägt den Wasserauslaufstutzen für das temperierte Zubereitungswasser. Ein Dichtungsring bzw. O-Ring kann für einen fluiddichten Abschluss des Ringspalts sorgen.

Nach einer weiteren vorteilhaften Ausgestaltungsform der Erfindung kann die Dickschichtheizung über einen Temperatursensor am oder im Auslaufstutzen verfügen. Er ist im Fließweg des Wassers am Wasserauslaufstutzen oder in dessen Nähe stromauf oder stromab angeordnet. Er kann die Temperierung des Zubereitungswassers überwachen und mit einer Steuereinrichtung in der Kaffeemaschine verbunden sein, die ggf. die Heizleistung der Dickschichtheizung anpasst.

Nach einer weiteren vorteilhaften Ausgestaltung der Erfindung sind das Innenrohr und zumindest einer der Verschlussdeckel lösbar miteinander verbunden. Insbesondere für Wartungszwecke ist eine derartige Gestaltung von Vorteil, da das Adapterelement oder Teile davon leicht ausgetauscht werden können. Zur Vereinfachung des Adapterelements kann ein Verschlussdeckel auch einstückig mit dem Innenrohr ausgebildet sein, während der andere Verschlussdeckel lösbar bleibt. Der lösbare Verschlussdeckel und das Innenrohr können über einen Bajonettverschluss, ein Gewinde oder Rasten als Kopplungsmittel verbunden werden, um eine einfache Montage und Demontage zu ermöglichen. Dabei können das Adapterelement und seine Kopplungsmittel derart ausgestaltet sein, dass zugleich mit dem Koppeln des Verschlussdeckels am Innenrohr das Adapterelement an der Dickschichtheizung fluiddicht montierbar ist. Damit kann die Konstruktion und Montage des Adapterelements weiter vereinfacht werden.

Nach einer weiteren vorteilhaften Ausgestaltung der Erfindung kann die Dickschichtheizung einen Temperatursensor an ihrer Oberfläche aufweisen. Er kann ebenfalls mit einer Steuereinrichtung der Kaffeemaschine verbunden sein, so dass die Temperatureinstellung des Heizelements zur Temperierung des Zubereitungswassers noch genauer möglich ist.

Die eingangs genannte Aufgabe wird außerdem durch ein Adapterelement an sich gelöst, das in der oben beschriebenen Weise ausgebildet ist, so dass es in eine herkömmliche bzw. standardisierte Dickschichtheizung für Haushaltsgeräte eingesetzt werden kann, um als Heizelement einer Kaffeemaschine dienen zu können. Dadurch lassen sich bekannte Dickschichtheizungen lediglich durch Einsetzen des erfindungsgemäßen Adapterelements für einen Einsatz in Kaffeemaschinen ausrüsten, so dass eine separate und kostenaufwändigere Herstellung eines Heizelements entällt.

Das Prinzip der Erfindung wird im Folgenden anhand von Zeichnungen beispielshalber noch näher erläutert. In der Zeichnung zeigen:
- Figur 1:: ein erfindungsgemäßes Heizelement aus Dickschichtheizung und einem eingesetzten, erfindungsgemäßen Adapterelement in einer Schrägansicht,
- Figur 2:: ein erfindungsgemäßes Heizelement aus Dickschichtheizung und erfindungsgemäßem Adapterelement in einer Explosionsansicht,
- Figur 3:: ein erfindungsgemäßes Adapterelement in einer Seitenansicht und
- Figur 4:: ein erfindungsgemäßes Heizelement aus Dickschichtheizung und erfindungsgemäßem Adapterelement in einer Schnittdarstellung an der Schnittlinie A-A.

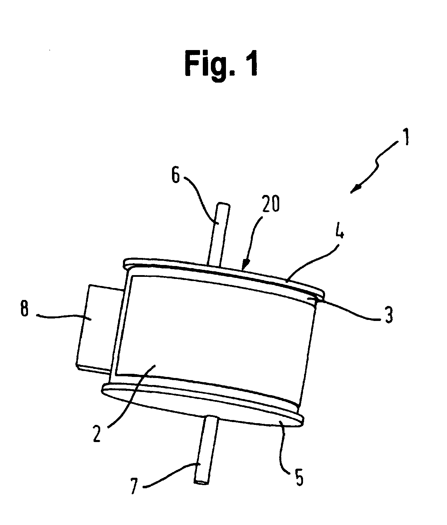

Figur 1 zeigt eine erfindungsgemäße Dickschichtheizung 1 mit einem eingesetzten Adapter 20 als Heizelement für einen Kaffeevollautomaten in einer Schrägansicht. Die Dickschichtheizung 1 umfasst ein flächiges Dickschichtelement 2, das auf einer äußeren Mantelfläche eines rohrförmigen Heizelementträgers 3 nahezu um dessen vollständigen Umfang herum aufgeklebt ist. Der Adapter 20 umfasst einen scheibenförmigen ersten bzw. oberen Verschlussdeckel 4 und einen ebensolchen zweiten oder unteren Verschlussdeckel 5, die den rohrförmigen Heizelementträger 3 axial verschließen. Am ersten Verschlussdeckel 4 ist ein Wassereinlaufstutzen 6 angebracht, durch den der Dickschichtheizung 1 Wasser zugeführt wird. Ein Wasserauslaufstutzen 7 am zweiten Verschlussdeckel 5 gibt das temperierte Zubereitungswasser für einen Brühvorgang ab. Der Wassereinlaufstutzen 6 und der Wasserauslaufstutzen 7 sind in eine Wasserleitung des Kaffeevollautomaten eingebunden. Heizungsanschlüsse 8 versorgen das Dickschichtelement 2 mit elektrischer Energie.

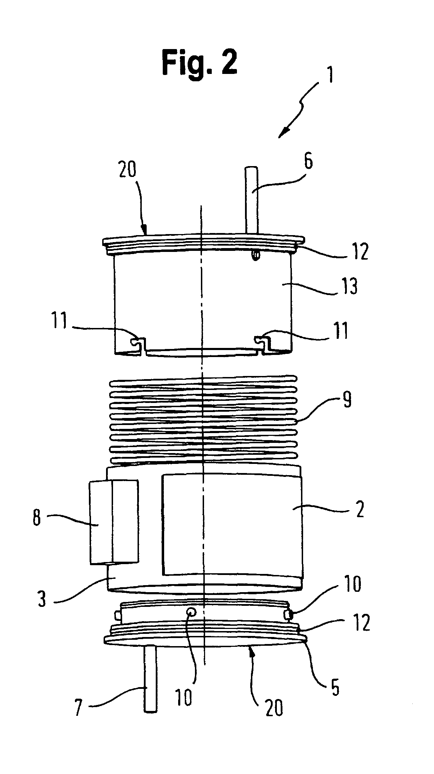

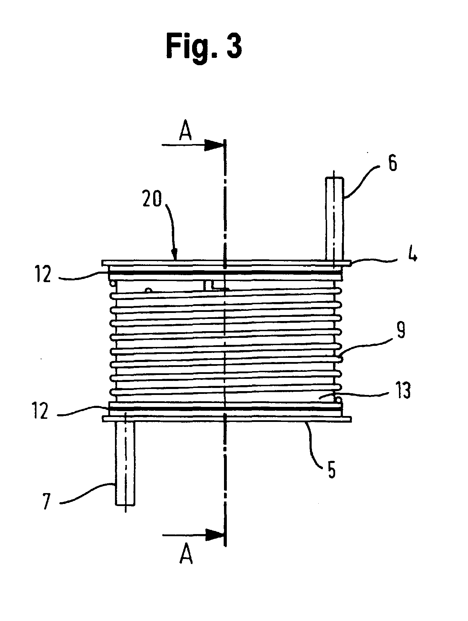

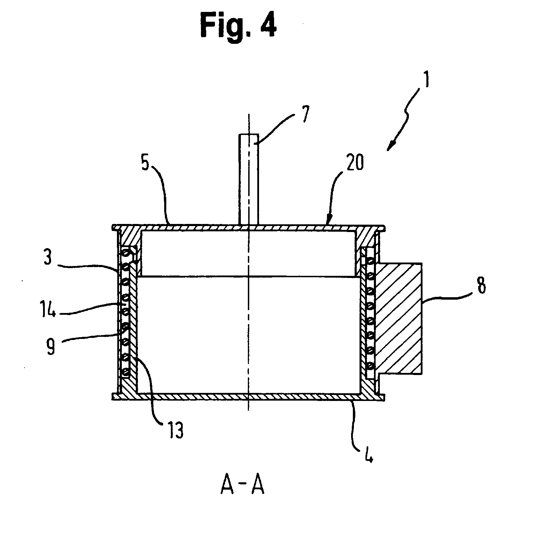

In der Explosionszeichnung der Figur 2 ist der Adapter 20 dreiteilig und mit der übrigen Dickschichtheizung 1 und in der Figur 3 montiert, aber separat dargestellt: An den ersten, oberen Verschlussdeckel 4 mit seinem Wassereinlaufstutzen 6 ist ein zylindrisches Innenrohr 13 angeformt. Es hat einen kleineren Innendurchmesser als der Heizelementträger 3 und schließt mit ihm einen Ringspalt 14 (siehe Figur 4) ein. An ihn schließen der Wassereinlaufstutzen 6 und der Wasserauslaufstutzen 7 fluidisch an. Durch Variieren des Innendurchmessers des Innenrohrs 13 kann die Größe des Ringspalts 14 verändert werden, der jedenfalls in den dargestellten Dimensionen eine deutlichere Verringerung des Durchflusses durch die Dickschichtheizung 1 bewirkt, als ohne den Einsatz des Adapters 20.

Der erste Verschlussdeckel 4 trägt an seinem Außenumfang einen O-Ring 12 als Dichtung. Am dem Verschlussdeckel 4 gegenüberliegenden Ende des Innenrohrs 13 sind L-Schlitze 11 angebracht, die zusammen mit Knöpfen 12 am unteren Verschlussdeckel 5 einen Bajonettverschluss bilden. Auch er trägt wie der obere Verschlussdeckel 4 einen O-Ring 12. Bei einer Aktivierung des Bajonettverschlusses werden die O-Ringe 12 an den Heizelementträger 3 im Bereich seiner Stirnseiten angepresst und stellen eine fluiddichte Verbindung zwischen ihm und dem Heizelementträger 3 sicher. Mit dem Verschießen des Bajonettverschlusses aus den L-Schlitzen 11 und den Knöpfen 12 ist der Adapter 20 ohne eine Modifikation des Heizelementträgers 3 an der Dickschichtheizung 1 betriebsbreit befestigt.

Auf den Mantel des Innenrohres 13 lässt sich eine eng gewendelte Spirale 9 aufschieben, die genau in den Ringspalt 14 (Figur 4) passt und ihn in einen spiralförmigen Kanal verwandelt. Die Spirale 9 zwingt Wasser, das den Einlaufstutzen 6 passiert, in einer spiralförmigen Bahn am Heizelementträger 3 entlang zum unteren Verschlussdeckel 5, bis es die Dickschichtheizung 1 durch den Auslaufstutzen 7 verlassen kann. Dieser Fließweg ermöglicht dem Wasser nicht nur eine an sich bekannte Energieaufnahme der Wärmeenergie des Dickschichtelements 2 über den Kontakt mit der Innenseite des Heizelementträgers 3. Die Spirale 9 sorgt anstatt eines axialen Durchflusses wie in einer herkömmlichen Dickschichtheizung für einen erheblich längeren spiralförmigen Fließweg entlang ihrer Wendel, der eine mehrfache Länge des axialen Durchflusses bietet. Da das Wasser dadurch länger in Kontakt mit dem Heizelementträger 3 steht, kann es für eine längere Zeitdauer mit Heizenergie beaufschlagt werden. Schon deswegen kann das Dickschichtelement 2 eine geringere Wärmeleistung abgeben. Hinzu kommt die Verringerung des Durchflusses infolge des Innenrohrs 13. Da also durch Einsetzen des Adapters 20 eine geringere Wassermenge mit einer höheren Verweildauer in der Dickschichtheizung 1 erhitzt wird, kann sie in einem Kaffeevollautomaten eingesetzt und mit geringerer elektrischer Energie betrieben werden, als ohne Adapter 20.

Figur 4 zeigt eine höhenverkehrte Schnittansicht entlang der Schnittlinie A-A gemäß Figur 3. Das Innenrohr 13 und der erste, jetzt untere Verschlussdeckel 4 sind einstückig ausgebildet und mit dem zweiten, jetzt oberen Verschlussdeckel 5 gekoppelt, wobei sie den rohrförmigen Heizelementträger 3 zwischen sich einklemmen. Auf das Innenrohr 13 ist die Spirale 9 aufgeschoben, die sowohl von außen am Innenrohr 13 als auch von innen am Heizelementträger 3 anliegt. Das Wasser, das durch den am ersten, jetzt unteren Verschlussdeckel 4 angeordneten und nicht dargestellten Wassereinlaufstutzen 6 in das Heizungselement 1 eingeleitet wird, fließt entlang der Spirale 9 in kreisförmigen Bahnen um das Innenrohr 13 herum und auf der Innenseite des Heizelementträgers 3 entlang durch den Ringspalt 14 in den Wasserauslaufstutzen 7. Durch die Spirale 9 wird erreicht, dass der Fließweg des zu erhitzenden Wassers ein Vielfaches des Umfanges des Innenrohres 13 annimmt, so dass das um den Heizelementträger 3 herum angeordnete Dickschichtelement 2 über einen langen Zeitraum hinweg Wärmeenergie auf das vorbei fließende Wasser abgeben kann.

Da es sich bei der vorhergehenden, detailliert beschriebenen Dickschichtheizung mit dem Adapter um ein Ausführungsbeispiel handelt, kann sie in üblicher Weise vom Fachmann in einem weiten Umfang modifiziert werden, ohne den Bereich der Erfindung zu verlassen. Insbesondere kann die Anordnung des Adapters an der Dickschichtheizung nach einem anderen Befestigungsprinzip, beispielsweise unlösbar verbunden, und folglich die Ausgestaltung des Adapters in anderer Form als in der hier beschriebenen erfolgen. Ebenso kann die Dimensionierung des Adapters in einer anderen Weise vorgenommen werden, wenn dies aus technischen, Platz- oder designerischen Gründen notwendig ist. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Heizelement
- 2: Dickschichtheizungselement
- 3: Heizelementträger
- 4: erster Verschlussdeckel
- 5: zweiter Verschlussdeckel
- 6: Wassereinlaufstutzen
- 7: Wasserauslaufstutzen
- 8: Heizungsanschlüsse
- 9: Spirale
- 10: L-Schlitz
- 11: Knopf
- 12: O-Ring
- 13: Innenrohr
- 14: Ringspalt
- 20: Adapter

## Patentansprüche

1. Dickschichtheizung für eine Kaffeemaschine mit einem darin einsetzbaren Adapterelement, welches die Durchflussmenge des zu erhitzenden Wassers definiert, wobei das Adapterelement Mittel (9) zur Verlängerung des Fließweges des Zubereitungswassers durch die Dickschichtheizung (1) aufweist, **gekennzeichnet durch** ein konzentrisches Innenrohr (13) des Adapterelements und eine auf dem Innenrohr (13) aufgeschobene Spirale (9) als Mittel zur Verlängerung des Fließweges.

2. Dickschichtheizung nach Anspruch 1, **dadurch gekennzeichnet, dass** das Innenrohr (13) und das Mittel zur Verlängerung des Fließweges einteilig ausgebildet sind.

3. Dickschichtheizung nach einem der Ansprüche 1 oder 2, **gekennzeichnet durch** zwei endseitige Verschlussdeckel (4; 5) mit einem Wassereinlaufstutzen (6) bzw. einem Wasserauslaufstutzen (7) als Bestandteile des Adapterelements, die einen Innenraum (14) der Dickschichtheizung (1) in axialer Richtung begrenzen.

4. Dickschichtheizung nach Anspruch 3, **gekennzeichnet durch** einen Temperatursensor am Wasserauslaufstutzen (7).

5. Dickschichtheizung nach Anspruch 3 oder 4, **dadurch gekennzeichnet, dass** das Innenrohr (13) und zumindest einer der Verschlussdeckel (4, 5) miteinander lösbar verbindbar sind.

6. Dickschichtheizung nach einem der vorhergehenden Ansprüche, **gekennzeichnet durch** einen Temperatursensor an der Oberfläche.

## Claims

1. Thick film heating for a coffee machine having an adapter element which can be inserted therein and which defines the flow rate of the water to be heated, wherein the adapter element has means (9) for extending the flow path of the preparation water through the thick film heating (1), **characterised by** a concentric inner tube (13) of the adapter element and a spiral (9) pushed onto the inner tube (13) as a means for extending the flow path.

2. Thick film heating according to claim 1, **characterised in that** the inner tube (13) and the means for extending the flow path are designed integrally.

3. Thick film heating according to one of claims 1 or 2, **characterised by** two end-side closure covers (4; 5) with a water inlet connection (6) or a water outlet connection (7) as components of the adapter element, which delimit an interior space (14) of the thick film heating (1) in the axial direction.

4. Thick film heating according to claim 3, **characterised by** a temperature sensor on the water outlet connection (7).

5. Thick film heating according to claim 3 or 4, **characterised in that** the inner tube (13) and at least one of the closure covers (4, 5) can be detachably connected to one another.

6. Thick film heating according to one of the preceding claims, **characterised by** a temperature sensor on the surface.

## Revendications

1. Chauffage à couche épaisse pour une machine à café, comprenant un élément adaptateur insérable dedans, lequel définit le débit de l'eau à échauffer, l'élément adaptateur présentant des moyens (9) pour prolonger le chemin d'écoulement de l'eau de préparation à travers le chauffage à couche épaisse (1), **caractérisé par** un tube intérieur concentrique (13) de l'élément adaptateur et une spirale (9) glissée sur le tube intérieur (13) en tant que moyen de prolongation du chemin d'écoulement.

2. Chauffage à couche épaisse selon la revendication 1, **caractérisé en ce que** le tube intérieur (13) et le moyen de prolongation du chemin d'écoulement sont réalisés d'une seule pièce.

3. Chauffage à couche épaisse selon l'une quelconque des revendications 1 ou 2, **caractérisé par** deux couvercles de fermeture (4 ; 5) côté extrémité, munis d'un embout d'entrée d'eau (6) resp. d'un embout de sortie d'eau (7) en tant que pièces intégrales de l'élément adaptateur, lesquels délimitent un espace intérieur (14) du chauffage à couche épaisse (1) en direction axiale.

4. Chauffage à couche épaisse selon la revendication 3, **caractérisé par** un capteur de température sur l'embout de sortie d'eau (7).

5. Chauffage à couche épaisse selon la revendication 3 ou 4, **caractérisé en ce que** le tube intérieur (13) et au moins un des couvercles de fermeture (4, 5) peuvent être reliés entre eux de manière amovible.

6. Chauffage à couche épaisse selon l'une quelconque des revendications précédentes, **caractérisé par** un capteur de température à la surface.
